# EUROPEAN PATENT SPECIFICATION

(11) **EP 3 623 250 B1**
(45) Date of publication and mention of the grant of the patent: **02.12.2020**
(21) Application number: 19196946.8
(22) Date of filing: 12.09.2019
(51) Int. Cl.: B61F 9/00, B61L 15/00, G01L 1/04

(54) **DERAILMENT DETECTION DEVICE AND ASSOCIATED RAILWAY VEHICLE AND METHOD**
ENTGLEISUNGSDETEKTIONSVORRICHTUNG UND ZUGEHÖRIGES SCHIENENFAHRZEUG UND VERFAHREN
DISPOSITIF DE DÉTECTION DE DÉRAILLEMENT, VÉHICULE FERROVIAIRE ASSOCIÉ ET PROCÉDÉ

(30) Priority: 13.09.2018 IN 201811034563
(43) Date of publication of application: 18.03.2020
(73) Proprietor: ALSTOM Transport Technologies, 93400 Saint-Ouen (FR)
(72) Inventor: ASGHAR ALI, Farooqui, Yelehanka New Town GKVK post 560065 Bangalore Karnataka (IN)
(74) Representative: Lavoix

(56) References cited:
- EP-A1- 1 422 119
- DE-A1- 10 148 482
- US-A1- 2015 158 507

## Description

The present invention concerns a derailment detection device configured to be provided onboard a railway vehicle to move on rails of a railway track.

By "derailment", it is understood any situation where at least one of the wheels of the railway vehicle is no longer in stable engagement with the corresponding rail.

This includes total derailment, in which the wheel is completely out of engagement with the rail, as well as partial derailment, in which the wheel, while still in contact with the rail, is in an anomalous position with respect to the rail which can lead to total derailment.

The derailment of a railway vehicle can cause serious material damage and even bodily harm for passengers and must therefore be quickly detected.

However, a derailment at the tail of a railway vehicle may not always be readily apparent at the head of the railway vehicle, where the driver is usually located. For this reason, significant damages may be caused already before the driver even notices derailment and takes measures, such as stopping the vehicle.

For this reason a number of derailment detection devices and methods have been proposed for assisting the driver.

EP 1 422 119 A1 discloses a derailment detection device comprising an inductive sensor and a method comprising monitoring the relative spacing between the device and the track rail and initiating an emergency brake when this spacing is above or below predefined thresholds.

Nevertheless, this derailment detection device is expensive and heavy due to the use of an inductive sensor.

One of the aims of the invention is therefore to provide a derailment detection device which guarantees the same level of safety while being less expensive and less heavy.

To this aim, the invention proposes a derailment detection device wherein the derailment detection device comprises:
- a magnetic assembly comprising at least one magnet and configured to be disposed faced to one of the rails ;
- a sensor configured to measure a magnetic force between the rail and the magnetic assembly; and
- an electronic processing module configured to compare the measured magnetic force to a predetermined threshold value and to emit an alert signal when the measured magnetic force is lower than the threshold value.

In specific embodiments, the derailment detection device comprises one or several of the optional following features, taken individually or according to any technical feasible combination:
- the at least one magnet is a permanent magnet;
- the at least one magnet has a remanence higher than 1.0 Tesla ;
- the sensor is a load cell ;
- the derailment detection device comprises a housing, the magnetic assembly being disposed in the housing, the housing being configured to partially magnetically isolate the magnetic assembly from the outside of the housing ;
- the housing is made of aluminum ;
- the derailment detection device is configured to be fixedly attached on an axle box of the railway vehicle.

The invention also concerns a railway vehicle configured to move on rails of a railway track, the railway vehicle comprising at least one derailment detection device as defined above.

The railway vehicle according to the invention comprises advantageously at least one bogie, the railway vehicle comprising, for each bogie, two derailment detection devices fixed to the bogie arranged for being each disposed in front of a respective rail among the rails of the railway track.

The invention further concerns a method of detecting a derailment of a railway vehicle as defined above, comprising the following steps:
- measuring the magnetic force applied between the rail and the magnetic assembly;
- comparing the measured magnetic force to a predetermined threshold value; and
- emitting an alert signal when the measured magnetic force is lower than the threshold value.

The invention will be better understood upon reading of the following description, given solely as a non-limiting example, and made in reference to the appended drawings, in which:
- figure 1 is a bottom view of a railway vehicle according to the invention ;
- figure 2 is a perspective view of a derailment detection device mounted on a railway vehicle ;
- figure 3 is another perspective view of the derailment detection device of figure 2 ;
- figure 4 is a bottom view of the derailment detection device of figure 2 ;
- figure 5 is an organization chart of the derailment detection device of figure 2 ;
- figure 6 is a perspective view of another derailment detection device mounted on a railway vehicle ;
- figure 7 is a perspective view of a load cell of the derailment detection device of figure 6 ; and
- figure 8 is a bottom view of the derailment detection device of figure 6.

The terms "vertical" and "horizontal" are generally understood in relation to the usual directions of a railway vehicle rolling on horizontal rails.

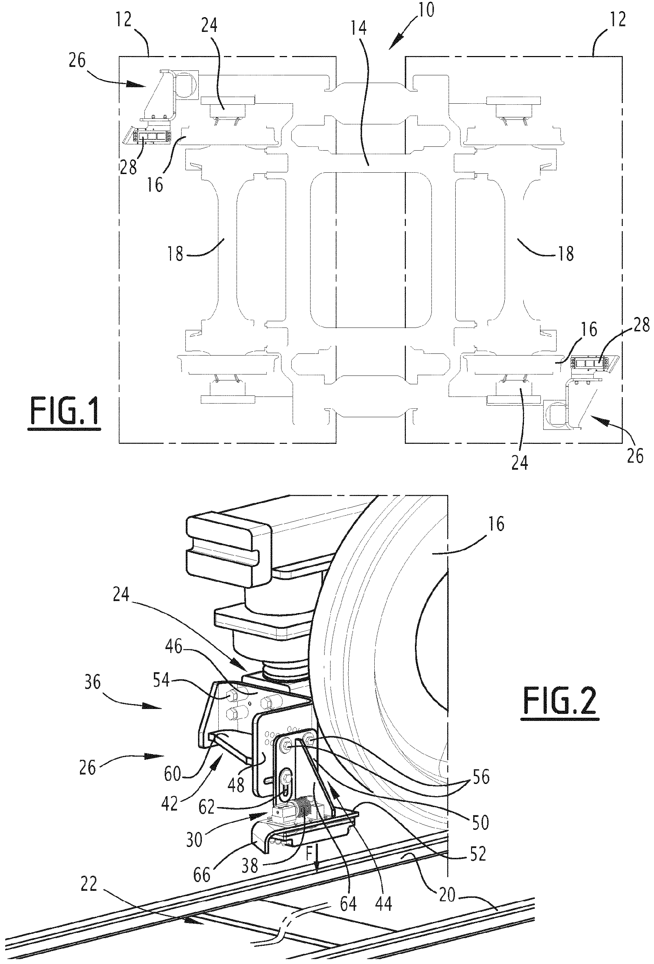

The railway vehicle 10 represented in figure 1 comprises at least one train carriage 12.

Each train carriage 12 being associated with at least one bogie 14 supporting the train carriage 12.

Each train carriage 12 comprises at least one inner compartment configured to receive passengers (passenger compartment) or freight (freight compartment).

Each bogie 14 is located, for example, at one extremity of the associated train carriage 12 and supports two adjacent train carriages 12 when the railway vehicle 10 comprises several train carriages 12, as shown in figure 1. Such a bogie 14 is said to be "common" to the two adjacent train carriages 12.

According to a conventional construction method, each train carriage 12 is supported by two bogies 14 at each of its extremities.

The bogie 14 comprises at least one pair of wheel 16, here two pairs of wheels 16, the two wheels 16 of each pair wheels 16 being coaxial.

The two wheels 16 of each pair of wheels 16 are for example connected by an axle 18 which is coaxial with the two wheels 16.

The wheels 16 are mounted mobile in rotation on the bogie 14. The wheels 16 are configured to roll on rails 20 of a railway track 22 and enable the railway vehicle 10 to move on the rails 20 with being guided along the rails 20, as visible in figure 2.

Each rail 20 is composed of a ferromagnetic material as, for example, iron or steel.

Each axle 18 is here mounted in rotation about its axis on the bogie 14 via two axle boxes 24 disposed in an adjacent way to each extremity of the axle 18.

The railway vehicle 10 further comprises at least one derailment detection device 26.

Each derailment detection device 26 is fixed to the bogie 14, advantageously to one of the axle boxes 24 and is disposed faced to one of the two rails 20, as shown in figure 2.

Advantageously, the railway vehicle 10 comprises, for each bogie 14, two derailment detection devices 26 fixed to the bogie 14 and arranged for being each disposed faced to a respective rail 20 among the rails 20 of the railway track 22.

As shown in figure 1, for each bogie 14, each derailment detection device 26 is associated to a distinct pair of wheels and to a distinct rail 20. The two derailment detection devices 26 are thus arranged diagonally opposite with reference to imaginary rectangle defined by the wheels 16 of the bogie 14. The two derailment detection devices 26 can thus be substantially identical such that there is no need to adapt the derailment detection devices 26 for each side of the bogie 14.

The derailment detection devices 26 are substantially identical and only one derailment detection devices 26 will now be described with reference to figure 2 to 5.

The derailment detection device 26 comprises at least one magnetic assembly 28, a load cell 30 and an electronic processing module 32.

The derailment detection device 26 further comprises a housing 34 and a fixing structure 36.

The magnetic assembly 28 comprises at least one magnet 37.

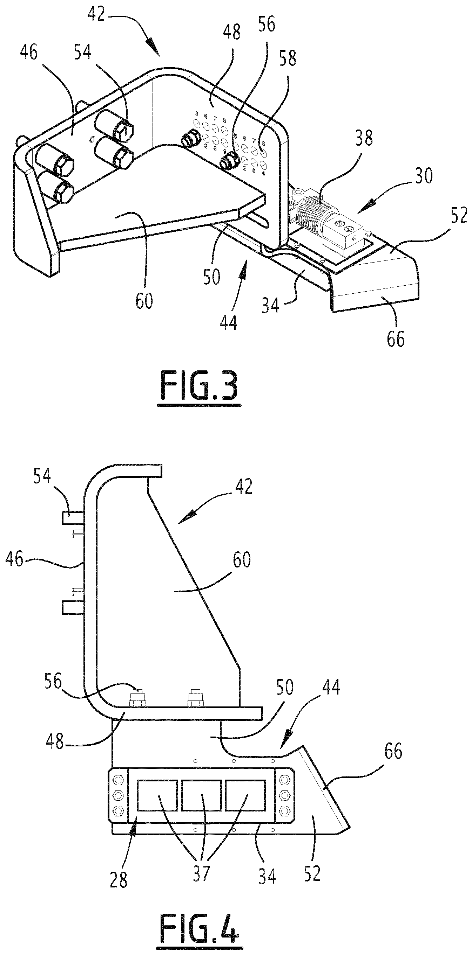

Advantageously, as shown in figure 4, magnetic assembly 28 comprises three magnets 37.

Each magnetic assembly 28 is configured to be disposed faced to one of the rails 20.

Each magnet 37 is advantageously a permanent magnet. A permanent magnet is made of a material that is magnetized and creates its own persistent magnetic field.

Each magnet 37 is advantageously a neodymium magnet. The use of neodymium enables the magnet 37 to be strongly magnetized without being too heavy and/or voluminous.

In particular, each magnet 37 has a remanence higher than 1.0 Tesla.

Each magnet 37 has a weight inferior to 0.5 kg, in particular comprised between 0.3 kg and 0.7 kg.

Each magnet 37 has for example a parallelepiped shape.

Each magnet 37 preferably defines an intern volume inferior to 62.5 cm³, in particular comprised between 50 cm³ and 100 cm³.

In a variant, each magnet 37 is an electromagnet. An electromagnet is a magnet in which the magnetic field is produced by an electric current.

The magnetic assembly 28 is disposed in the housing 34.

The housing 34 is configured to partially magnetically isolate the magnetic assembly 28 from the outside of the housing 34.

In particular, as visible in figures 3 and 4, the housing 34 is configured to isolate the magnetic assembly 28 in all the directions except towards the associated rail 20, here downwardly.

Advantageously, the housing 34 is made of aluminum. Aluminum is a material that is non-magnetic.

The magnetic assembly 28 comprising magnets 37 which are magnetized and the rail 20 being composed of a ferromagnetic material, a magnetic force F is generated between the rail 20 and the magnetic assembly 28.

The load cell 30 is configured to measure the magnetic force F between the rail 20 and the magnetic assembly 28.

In the present case, the magnetic assembly 28 is fixed to the bogie 14 via the load cell 30. Hence, the load cell 30 can measure the attractive force exerted between the magnetic assembly 28 and the associated rail 20

The magnetic force F applied by the rail 20 on the magnetic assembly 28 is represented in the figure 2.

The magnetic force F is here an attractive force.

The intensity of the magnetic force F between the magnetic assembly 28 and the corresponding rail 20 is a function of the distance between the magnetic assembly 28 and this rail 20.

The intensity of the magnetic force F diminishes when the distance between the rail 20 and the magnetic assembly 28 increases.

As an example, the intensity of the magnetic force F between the magnetic assembly 28 comprising the three magnets 37 of figure 4 and the rail 20, when the railway vehicle 10 is located on the rails 20, is approximately 600 N.

The load cell 30 is for example a transducer configured to create an electrical signal whose magnitude is directly proportional to the magnetic force F and to determine a corresponding measured magnetic force Fm.

The load cell 30 comprises a strain gauge 38 extending along a horizontal axis parallel to the rail 20 and a measurement module 39.

One extremity of the strain gauge 38 is fixed to the bogie 14 via the fixing structure 36 and the other extremity is fixed to the magnetic assembly 28.

The strain gauge 38 is configured to be deformed when the magnetic assembly 28 is moving relatively to the bogie 14, in particular when the magnetic assembly 28 is attracted by the rail 20 due to the magnetic force F.

The deformation of the strain gauge 38 changes its electrical resistance, by an amount that is proportional to the magnetic force F.

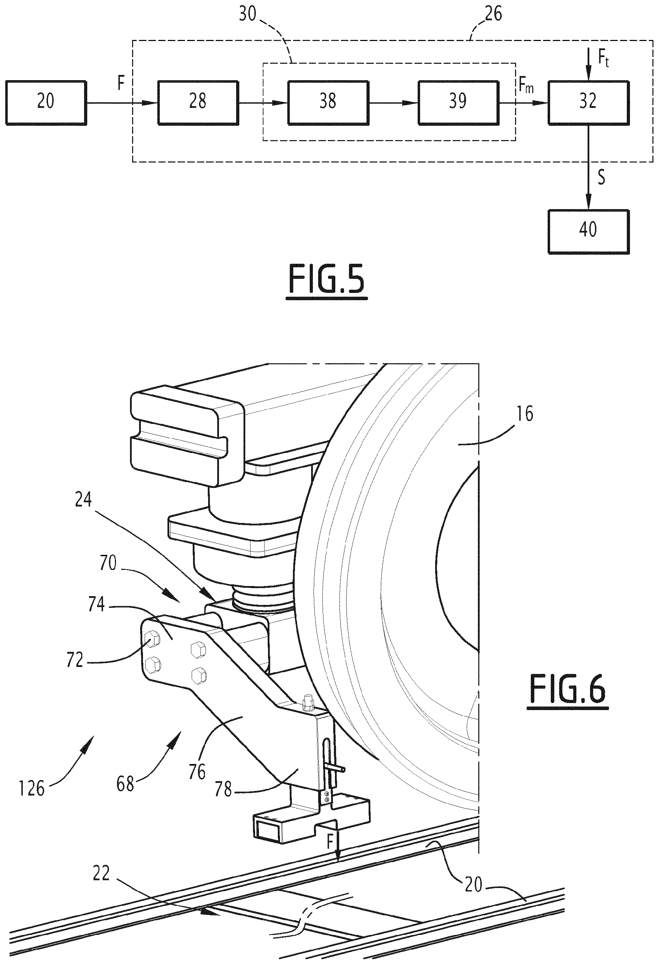

In reference to figure 5, the measurement module 39 is configured to detect the electrical resistance change of the strain gauge 38 and to determine the corresponding measured magnetic force Fm.

The measurement module 39 is configured to emit the value of the measured magnetic force Fm to the processing module 32.

The load cell 30 is advantageously received in a protective box (not shown).

The processing module 32 is configured to compare the measured magnetic force Fm to a predetermined threshold value Ft and to emit an alert signal S when the measured magnetic force Fm is lower than the threshold value Ft.

When a derailment of a wheel 16 occurs, the magnetic assembly 28 of the derailment detection device 26 is no more located faced to the associated rail 20 and the magnetic force F between the magnetic assembly 28 and the rail 20 decreases.

The threshold value Ft is therefore determined to be inferior to the measured magnetic force Fm in normal conditions when the railway vehicle 10 rolls on the rails 20.

In particular, the threshold value Ft is approximately equal to zero, notably inferior to 50 N.

As shown in figure 5, the alert signal S is advantageously received by an emergency break module 40 configured to trigger an emergency braking when receiving the alert signal S.

The emergency brake module 40 is for example part of the control system of the railway vehicle 10 known as Train Control & Management System (TCMS).

The fixing structure 36 of the derailment detection device 24 is configured to rigidly connect the load cell 30 to the axle box 24.

Advantageously, the fixing structure 36 is configured for allowing adjustment of the position of the magnetic assembly 28 with respect to the corresponding rail 20, for example in one adjustment position among a plurality of discrete adjustment positions or configuration, or alternatively in an infinity of positions or configuration between two extreme positions or configurations.

In the example illustrated in figures 2 to 4, the fixing structure 36 comprises two brackets 42, 44. Each bracket 42, 44 is advantageously made of steel.

As shown in figures 2 and 3, each bracket 42, 44 has a L-shape.

Each bracket 42, 44 comprises two branches, respectively 46, 48 and 50, 52, defining the L shaped of the bracket 42, 44.

The first bracket 42 is fixed to the axle box 24.

The branches 46, 48 of the first bracket 42 extend along respective vertical plans, the two vertical plans being perpendicular one to the other.

The first branch 46 is advantageously fixed to the axle box 24 by four bolts 54. The four bolts 54 form the tops of an imaginary rectangle.

The second branch 48 is advantageously fixed to the second bracket 44 by advantageously four bolts 56. The four bolts 56 form the tops of an imaginary rectangle.

The second branch 48 is provided with a plurality of holes 58 through which the bolts 56 extend.

The holes 58 are configured to define a plurality of fixing configurations between the two brackets 42, 44 in order to adjust the position of the derailment detection device 26, e.g. as a function of the wear of the wheels 16. Here, the holes 58 define eight distinct discrete configurations to adjust the position of the derailment detection device 26, e.g. by increment of 5 mm in height.

The first bracket 42 optionally comprises a first corner reinforcing piece 60 extending along a horizontal plan. The first corner reinforcing piece 60 is fixed to the two branches 46, 48 of the first bracket 42 to prevent deformation of the first bracket 42.

The two branches 50, 52 of the second bracket 44 extend along respective plans, the two plans being perpendicular to each other. The first branch 50 extends along a vertical plan and the second branch 52 extends along a horizontal plan.

The second part 48 of the first bracket 42 is fixed to the first branch 50 of the second bracket 44 by the four bolts 56.

The first branch 50 of the second bracket 44 defines four holes 62 through which the bolts 56 extend. The holes 62 are for example oblong holes.

The load cell 30 is fixed to the second part 48 of the second bracket 44.

The second bracket 44 optionally comprises a second corner reinforcing piece 64. The second corner reinforcing piece 64 is fixed to the two branches 50, 52 of the second bracket 44 and prevents deformation of the second bracket 44.

The second bracket 44 optionally comprises a protective screen 66. The protective screen 66 protrudes vertically from the extremity of the second branch 52 opposite to the wheel 16. The protective screen 66 protects the magnetic assembly 28 from external elements which would eventually hit the magnetic assembly 28 when the railway vehicle 10 is rolling.

A method for detecting a derailment of a railway vehicle 10 will now be described.

Initially, the railway vehicle 10 is moving on the rails 20 of the railway track 22.

In particular, each wheel 16 is rolling on the associated rail 20.

Each derailment detection device 26 is disposed faced to one of the rails 20. In particular, the magnetic assembly 28 of each derailment detection device 26 is disposed in register of one of the rails 20.

Advantageously, for each bogie 14, two derailment detection devices 26 are disposed faced to a respective one of the rails 20. In particular, each axle 18 is associated to one of the two derailment detection devices 26.

For each derailment detection device 26, an attractive magnetic force F is generated between the rail 20 and the magnetic assembly 28.

This produces a deformation of the strain gauge 38 of the load cell 30. The deformation of the strain gauge 38 changes its electrical resistance, by an amount that is proportional to the magnetic force F. The measurement module 39 detects the electrical resistance change of the strain gauge 38 and determines the corresponding measured magnetic force Fm.

Thus, the load cell 30 measure the magnetic force F applied between the rail 20 and the magnetic assembly 28 by determining the measured magnetic force Fm.

The measurement module 39 emits the value of the measured magnetic force Fm to the processing module 32.

The processing module 32 compares the measured magnetic force Fm to the predetermined threshold value Ft.

While the railway vehicle 10 is moving normally on the railway track 24, the measured magnetic force Fm keeps being higher than the threshold value Ft and the processing module 32 is passive.

In case an incident occurs during the moving of the railway vehicle 10 such as a derailment of one of the wheels 16, the wheel 16 and the associated axle 18 are no more in stable engagement with the rails 20. The derailment detection device 26 associated to the problematic axle 18 is then no more disposed faced to the corresponding rail 20.

As a consequence, the magnetic force F between the magnetic assembly 28 and the rail 20 decreases significantly. In particular, the measure magnetic force Fm is then lower than the threshold value Ft.

When the processing module 32 detects that the measured magnetic force Fm is lower than the threshold value Ft, the processing module 32 emits an alert signal S. The alert signal S is received by the emergency brake module 40 which triggers an emergency braking.

The railway vehicle 10 is thus stopped very quickly before an accident occurs such as a total derailment, in which several wheels 16 are completely out of engagement with the railway track 22 and which can lead to material damage and bodily harm if the railway vehicle 10 overturns.

The derailment detection device 26 guarantees therefore a great level of safety for the railway vehicle 10.

Moreover, thanks to the use of magnets 37, the device 26 is less expensive and lighter than the derailment detection devices disclosed in the state of the art.

The derailment detection device 26 is easily installed on every type of railway vehicle 10 and the fixation of the derailment detection device 26 to the axle box 24 is adapted to the wheels 16 wear thanks to the different configurations of the fixing holes 58.

In addition, the maintenance of the device 26 is easily done as the derailment detection device 26 is directly accessible to an operator.

A second derailment detection device 126 according to the invention is represented in figures 6 to 8.

The second derailment detection device 126 differs from the first derailment detection device 26 in that the fixing structure 36 of the second device 126 comprises a main bracket 68 and two auxiliary brackets 70.

The main bracket 68 and the two auxiliary brackets 70 are e.g. made of aluminum. The use of aluminum enables to obtain a device 126 lighter than the first device 26.

The main bracket 68 is rigidly fixed to the axle box 24 via the two auxiliary brackets 70, e.g. by bolts 72 extending through the auxiliary brackets 70. As illustrated four bolts 72 are provided and each auxiliary bracket 70 is passed through by two of the bolts 72.

Each auxiliary bracket 70 extends along a horizontal axis parallel to the rail 20.

The main bracket 78 comprises three segments 74, 76, 78, a first segment 74 rigidly fixed to the two auxiliary brackets 70, a second segment 76 extending between the first segment 74 and the third segment 78. The second segment 76 is e.g. a ramp sloping in direction of the rail 20.

The third segment 78 defines for example an inner volume 80. The load cell 30 is disposed in the inner volume 80. In particular, the strain gauge 38 of the load cell 30 is disposed vertically.

The magnetic assembly 28 is supported vertically by the strain gauge 38. As a consequence, when the magnetic assembly 28 is attracted by the rail 20, the strain gauge 38 is deformed in extension along a vertical axis.

The load cell 30 is fixed to the third segment 78 by an adjustment device 82 configured to adjust the vertical distance between the magnetic assembly 28 and the rail 20, e.g. as a function of the wear of the associated wheel 16.

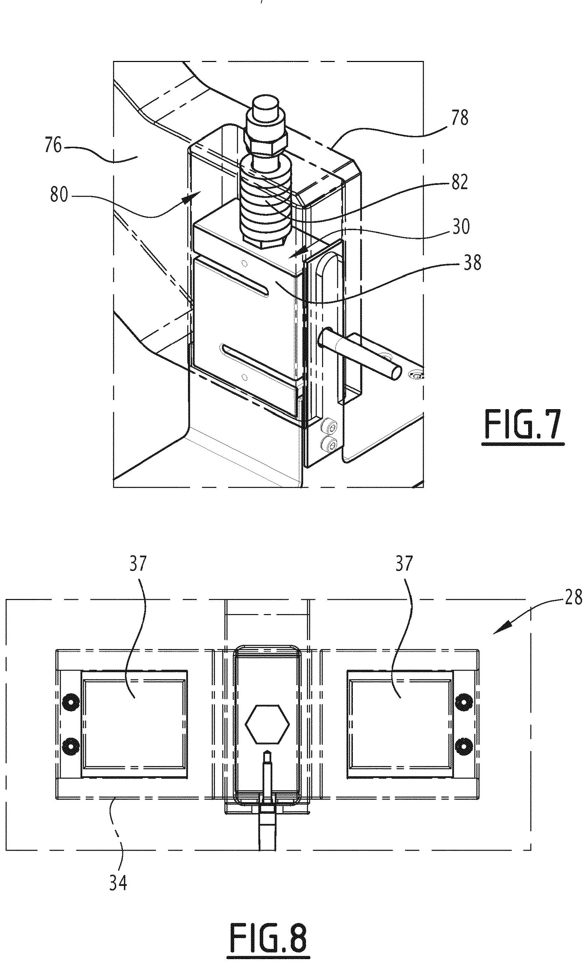

As visible in figure 8, the magnetic assembly 28 comprises for example two magnets 37.

The method of detecting a derailment of a railway vehicle 10 comprising the second device 126 is identical to the method described above for the first derailment detection device 26 and will therefore not be described again.

The second derailment detection device 126 guarantees therefore the same level of safety for the railway vehicle 10 as the first derailment detection device 26 while being possibly even lighter.

## Claims

1. Derailment detection device (26, 126) configured to be provided onboard a railway vehicle (10) configured to move on rails (20) of a railway track (22), wherein the derailment detection device (10) comprises :
- a magnetic assembly (28) comprising at least one magnet (37) and configured to be disposed faced to one of the rails (20) ;
- a sensor (30) configured to measure a magnetic force (F) between the rail (20) and the magnetic assembly (28) ; and
- an electronic processing module (32) configured to compare the measured magnetic force (Fm) to a predetermined threshold value (Ft) and to emit an alert signal (S) when the measured magnetic force (Fm) is lower than the threshold value (Ft).

2. Derailment detection device (26, 126) according to claim 1, wherein the at least one magnet (37) is a permanent magnet.

3. Derailment detection device (26, 126) according to claim 2, wherein the at least one magnet (37) has a remanence higher than 1.0 Tesla.

4. Derailment detection device according (26, 126) to claim 2 or 3, wherein the sensor is a load cell.

5. Derailment detection device (26, 126) according to any one of the preceding claims, comprising a housing (34), the magnetic assembly (28) being disposed in the housing (34), the housing (34) being configured to partially magnetically isolate the magnetic assembly (28) from the outside of the housing (34).

6. Derailment detection device (26, 126) according to claim 5, wherein the housing (34) is made of aluminum.

7. Derailment detection device (26, 126) according to any one of the preceding claims, wherein the derailment detection device (26, 126) is configured to be fixedly attached on an axle box (24) of the railway vehicle (10).

8. Railway vehicle (10) configured to move on rails (20) of a railway track (24), the railway vehicle (10) comprising at least one derailment detection device (26, 126) according to any one of the preceding claims.

9. Railway vehicle (10) according to claim 8, comprising at least one bogie (14), the railway vehicle (10) comprising, for each bogie (14), two derailment detection devices (26, 126) fixed to the bogie (14) arranged for being each disposed in front of a respective rail (20) among the rails (20) of the railway track (22).

10. Method for detecting a derailment of a railway vehicle (10) according to claim 8 or 9, the method comprising the following steps:
- measuring the magnetic force (F) applied between the rail (20) and the magnetic assembly (28) ;
- comparing the measured magnetic force (Fm) to a predetermined threshold value (Ft) ; and
- emitting an alert signal (S) when the measured magnetic force (Fm) is lower than the threshold value (Ft).

## Patentansprüche

1. Entgleisung-Detektionsvorrichtung (26, 126), welche eingerichtet ist, um an Bord eines Schienenfahrzeugs (10) bereitgestellt zu sein, welches eingerichtet ist, um sich auf Schienen (20) eines Bahngleises (22) zu bewegen, wobei die Entgleisung-Detektionsvorrichtung (10) aufweist:
- eine Magnetanordnung (28), welche mindestens einen Magneten (37) aufweist und eingerichtet ist, um gegenüber von einer der Schienen (20) angeordnet zu sein,
- einen Sensor (30), welcher eingerichtet ist, um eine magnetische Kraft (F) zwischen der Schiene (20) und der Magnetanordnung (28) zu messen, und
- ein elektronisches Verarbeitungsmodul (32), welches eingerichtet ist, um die gemessene magnetische Kraft (Fm) mit einem vorbestimmten Schwellwert (Ft) zu vergleichen und ein Alarmsignal (S) auszusenden, wenn die gemessene magnetische Kraft (Fm) geringer als der Schwellwert (Ft) ist.

2. Entgleisung-Detektionsvorrichtung (26, 126) gemäß Anspruch 1, wobei der mindestens eine Magnet (37) ein Permanentmagnet ist.

3. Entgleisung-Detektionsvorrichtung (26, 126) gemäß Anspruch 2, wobei der mindestens eine Magnet (37) eine Remanenz hat, welche höher als 1,0 Tesla ist.

4. Entgleisung-Detektionsvorrichtung (26, 126) gemäß Anspruch 2 oder 3, wobei der Sensor eine Kraftmessdose ist.

5. Entgleisung-Detektionsvorrichtung (26, 126) gemäß irgendeinem der vorherigen Ansprüche, welche ein Gehäuse (34) aufweist, wobei die Magnetanordnung (28) in dem Gehäuse (34) angeordnet ist, und wobei das Gehäuse (34) eingerichtet ist, um die Magnetanordnung (28) von dem Äußeren des Gehäuses (34) teilweise magnetisch zu isolieren.

6. Entgleisung-Detektionsvorrichtung (26, 126) gemäß Anspruch 5, wobei das Gehäuse (34) aus Aluminium hergestellt ist.

7. Entgleisung-Detektionsvorrichtung (26, 126) gemäß irgendeinem der vorherigen Ansprüche, wobei die Entgleisung-Detektionsvorrichtung (26, 126) eingerichtet ist, um fest an einem Achslager (24) des Schienenfahrzeugs (10) angebracht zu sein.

8. Schienenfahrzeug (10), welches eingerichtet ist, um sich auf Schienen (20) eines Bahngleises (24) zu bewegen, wobei das Schienenfahrzeug (10) mindestens eine Entgleisung-Detektionsvorrichtung (26, 126) gemäß irgendeinem der vorherigen Ansprüche aufweist.

9. Schienenfahrzeug (10) gemäß Anspruch 8, welches mindestens ein Drehgestell (14) aufweist, wobei das Schienenfahrzeug (10), für jedes Drehgestell (14), zwei an dem Drehgestell (14) befestigte Entgleisung-Detektionsvorrichtungen (26, 126) aufweist, welche angeordnet sind, um jeweilig vor einer jeweiligen Schiene (20) von den Schienen (20) des Bahngleises (22) angeordnet zu sein.

10. Verfahren zum Detektieren eines Entgleisens eines Schienenfahrzeugs (10) gemäß Anspruch 8 oder 9, wobei das Verfahren die folgenden Schritte aufweist:
- Messen der magnetischen Kraft (F), welche zwischen der Schiene (20) und der Magnetanordnung (28) angelegt ist,
- Vergleichen der gemessenen magnetischen Kraft (Fm) mit einem vorbestimmten Schwellwert (Ft) und
- Aussenden eines Alarmsignals (S), wenn die gemessene magnetische Kraft (Fm) geringer als der Schwellwert (Ft) ist.

## Revendications

1. Dispositif de détection de déraillement (26, 126) configuré pour être embarqué dans un véhicule ferroviaire (10) configuré pour se déplacer sur des rails (20) d'une voie ferrée (22), le dispositif de détection de déraillement (10) comprenant :
- un ensemble magnétique (28) comprenant au moins un aimant (37) et configuré pour être disposé en face de l'un des rails (20) ;
- un capteur (30) configuré pour mesurer une force magnétique (F) entre le rail (20) et l'ensemble magnétique (28) ; et
- un module de traitement électronique (32) configuré pour comparer la force magnétique mesurée (Fm) avec une valeur de seuil prédéterminée (Ft) et pour émettre un signal d'alerte (S) lorsque la force magnétique mesurée (Fm) est inférieure à la valeur de seuil (Ft).

2. Dispositif de détection de déraillement (26, 126) selon la revendication 1, dans lequel l'au moins un aimant (37) est un aimant permanent.

3. Dispositif de détection de déraillement (26, 126) selon la revendication 2, dans lequel l'au moins un aimant (37) présente une rémanence supérieure à 1 Tesla.

4. Dispositif de détection de déraillement (26, 126) selon la revendication 2 ou 3, dans lequel le capteur est une cellule de charge.

5. Dispositif de détection de déraillement (26, 126) selon l'une quelconque des revendications précédentes, comprenant un boîtier (34), l'ensemble magnétique (28) étant disposé dans le boîtier (34), le boîtier (34) étant configuré pour isoler magnétiquement de façon partielle l'ensemble magnétique (28) de l'extérieur du boîtier (34).

6. Dispositif de détection de déraillement (26, 126) selon la revendication 5, dans lequel le boîtier (34) est composé d'aluminium.

7. Dispositif de détection de déraillement (26, 126) selon l'une quelconque des revendications précédentes, dans lequel le dispositif de détection de déraillement (26, 126) est configuré pour être fixé à demeure sur une boîte d'essieu (24) du véhicule ferroviaire (10).

8. Véhicule ferroviaire (10) configuré pour se déplacer sur des rails (20) d'une voie ferrée (24), le véhicule ferroviaire (10) comprenant au moins un dispositif de détection de déraillement (26, 126) selon l'une quelconque des revendications précédentes.

9. Véhicule ferroviaire (10) selon la revendication 8, comprenant au moins un bogie (14), le véhicule ferroviaire (10) comprenant, pour chaque bogie (14), deux dispositifs de détection de déraillement (26, 126) fixés sur le bogie (14) et prévus pour être chacun disposés en face d'un rail respectif (20) parmi les rails (20) de la voie ferrée (22).

10. Procédé de détection d'un déraillement d'un véhicule ferroviaire (10) selon la revendication 8 ou 9, le procédé comprenant les étapes suivantes :
- la mesure de la force magnétique (F) appliquée entre le rail (20) et l'ensemble magnétique (28) ;
- la comparaison de la force magnétique mesurée (Fm) avec une valeur de seuil prédéterminée (Ft) ; et
- l'émission d'un signal d'alerte (S) lorsque la force magnétique mesurée (Fm) est inférieure à la valeur de seuil (Ft).
